# EUROPÄISCHE PATENTSCHRIFT

(11) **EP 1 734 195 B1**
(45) Veröffentlichungstag und Bekanntmachung des Hinweises auf die Patenterteilung: **18.08.2010**
(21) Anmeldenummer: 06012115.9
(22) Anmeldetag: 13.06.2006
(51) Int. Cl.: E04B 1/80, E04B 1/10

(54) **Wandelement**
WALL ELEMENT
ÉLÉMENT DE MUR

(30) Priorität: 16.06.2005 DE 102005027973
(43) Veröffentlichungstag der Anmeldung: 20.12.2006
(73) Patentinhaber: Variotec Sandwichelemente GmbH & Co. KG, 92318 Neumarkt (DE)
(72) Erfinder: Stölzel, Christof, 92318 Neumarkt/Voggenthal (DE)
(74) Vertreter: Zinnecker, Armin

(56) Entgegenhaltungen:
- EP-A- 1 500 752
- EP-A- 1 544 367
- DE-A1- 10 225 167

## Beschreibung

Die Erfindung betrifft ein Wandelement und eine Fassade aus derartigen Wandelementen.

Das Wandelement umfaßt eine Vakuumisolationsplatte, eine äußere Holzschicht und/oder eine innere Holzschicht und ein diese Teile durchdringendes Verbindungselement.

Aus der prioritätsälteren, nicht vorveröffentlichten EP-A-1 544 367, die Stand der Technik nach Artikel 54(3) EPÜ ist, ist ein ähnliches Wandelement bekannt, das eine Vakuumisolationsplatte, die in der genannten Voranmeldung als Verbundwärmedämmplatte bezeichnet wird, und zwei auf beiden Seiten der Vakuumisolationsplatte vorgesehene Betonteile, die unmittelbar an die Vakuumisolationsplatte angrenzen, umfaßt.

Die Vakuumisolationsplatte umfaßt eine oder mehrere Vakuumdämmplatten aus einem evakuierbaren, porösen Material geringer Wärmeleitfähigkeit und eine vakuumdichte Umhüllung, insbesondere eine gasdichte und diffusionsdichte Umhüllung. Besonders geeignet sind Folien aus Kunststoff, Folien aus Metall, insbesondere aus Aluminium, oder Folien aus Kunststoff und Metall, insbesondere eine metallisierte Hochbarrierefolie aus Kunststoff. Die Vakuumdämmplatten bilden den Kern der Vakuumisolationsplatte. Als Material für die Vakuumdämmplatten sind insbesondere mikroporöse Kieselsäurepulver oder offenporige Schäume aus Polyurethan oder Polystyrol geeignet. Bei mikroporösen Kernen genügt aufgrund ihrer extrem kleinen Porengröße von weniger als einem halben Mikrometer ein Vakuum von etwa 1 bis 10 mbar. Bei offenporigen Schäumen ist es dagegen vorteilhaft oder erforderlich, daß die Gasdrücke aufgrund der gröberen Poren im Bereich von 0,1 bis 1 mbar liegen.

Wenn mehrere Vakuumdämmplatten von einer Umhüllung umgeben sind, liegen diese Vakuumdämmplatten vorzugsweise nebeneinander. Vorteilhaft ist es, die in der EP-A-1 544 367 beschriebenen Merkmale vorzusehen. Die eine oder mehreren Vakuumdämmplatten können beidseitig von Kunststoffschaum, vorzugsweise von Polyurethanschaum, umgeben sein. Vorzugsweise ist der Kunststoffschaum bzw. Polyurethanschaum von der vakuumdichten Umhüllung abgedeckt.

Die vakuumdichte Umhüllung ist vorzugsweise von mindestens einer weiteren Platte abgedeckt, die aus Kunststoffschaum, vorzugsweise aus Polyurethanschaum, vorzugsweise aus gepresstem Polyurethanschaum, aber auch aus einem anderen Werkstoff mit niedriger Wärmeleitfähigkeit bestehen kann. Die weitere Platte ist vorzugsweise auf die Umhüllung bzw. auf die Aluminiumfolie aufgeklebt.

Nach einer weiteren vorteilhaften Weiterbildung sind die Außenkanten der Vakuumdämmplatten von einem druckstabilen Konstruktionsschaum umgeben. Der druckstabile Konstruktionsschaum umgibt vorzugsweise den gesamten umlaufenden Rand der Vakuumdämmplatten. Er weist vorzugsweise die gleiche Stärke auf wie die Vakuumdämmplatten. Vorzugsweise besteht der druckstabile Konstruktionsschaum aus Polyurethan. Zur Herstellung dieser vorteilhaften Weiterbildung kann der druckstabile Konstruktionsschaum vor dem beidseitigen Umschäumen mit Kunststoffschaum im Kantenbereich der Vakuumdämmplatten in vorzugsweise gleicher Stärke als Abstandshalter eingelegt werden.

Eine weitere vorteilhafte Weiterbildung ist dadurch gekennzeichnet, daß die Außenkanten der Vakuumdämmplatten bzw. des druckstabilen Konstruktionsschaums von einer Hochbarrierefolie umgeben sind. Die Hochbarrierefolie wirkt vorzugsweise als Diffusionssperrschicht, die eine Permeation von Gas und Wasserdampf in die Vakuumdämmplatten verhindert. Sie ist vorzugsweise gasdicht und diffusionsdicht. Die Hochbarrierefolie ist vorzugsweise aus Kunststoff, vorzugsweise aus Butyl. Sie kann allerdings auch aus einem beschichteten Gewebe bestehen, insbesondere aus einem mit Butyl oder einem anderen geeigneten Kunststoff beschichteten Gewebe. Vorteilhaft ist es, wenn die Hochbarrierefolie U-förmig ausgestaltet ist.

Vorteilhaft ist es, wenn die Hochbarrierefolie an der vakuumdichten Umhüllung anliegt. Die Hochbarrierefolie ist vorzugsweise mit der Umhüllung verklebt. Vorteilhaft ist es, wenn die Hochbarrierefolie U-förmig ist und die Schenkel der Hochbarrierefolie an der Umhüllung anliegen bzw. mit der Umhüllung verklebt sind.

Zur Herstellung dieser vorteilhaften Weiterbildung kann um die Außenkanten der Vakuumdämmplatten bzw. des druckstabilen Konstruktionsschaums eine vorzugsweise U-förmige Hochbarrierefolie herumgelegt werden. Die Schenkel der Hochbarrierefolie können mit der vakuumdichten Umhüllung verklebt werden, so daß der Innenraum gut gegen eindringende Gase und Feuchtigkeit geschützt ist.

Nach einer weiteren vorteilhaften Weiterbildung sind die Außenkanten der Vakuumdämmplatten von einem vorkomprimierten Fugendichtband (Compriband) umgeben, das seinerseits von einer Hochbarrierefolie umgeben ist, insbesondere von einem Butylband.

An oder in einer oder mehreren oder allen Vakuumdämmplatten kann ein Sensor zur Überprüfung des Gasdrucks angebracht sein. Der Sensor kann über elektrische Zuleitungen ausgelesen werden.

Eine oder mehrere oder alle Vakuumdämmplatten können Aussparungen aufweisen, in die Anker oder Verbindungselemente eingesetzt werden oder sind. Die Aussparungen können sich in der Mitte und/oder an den Rändern der Vakuumdämmplatten befinden. Zur Herstellung dieser vorteilhaften Weiterbildung können an Stellen, an denen Aussparungen in den Vakuumdämmplatten vorhanden sind, durch die Vakuumisolationsplatte hindurch Löcher gefräst und dort Anker oder Verbindungselemente eingesetzt werden. Die Anker sind vorzugsweise aus einem Material mit niedriger Wärmeleitung und/oder hoher mechanischen Festigkeit hergestellt, vorzugsweise aus Kohlefaser, Glasfaser oder vergleichbaren Werkstoffen wie beispielsweise Wood Composites Plastic. Besonders geeignet sind GFK-Werkstoffe und kohlefaserverstärkter Kunststoff. Die Verbindungselemente sind im allgemeinen aus Metall hergestellt. Bei den Verbindungselementen handelt es sich insbesondere um Schraubbolzen oder sonstige längliche Verbindungselemente aus Metall. Die Verbindungselemente bilden auf diese Weise Wärmebrücken, wodurch die Isolationswirkung beeinträchtigt wird.

Aus der DE-A-102 25167 ist ein Wandaufbau für Gebäudeaußenwände bekannt, bei dem eine Vakuumisolationsplatte, eine äußere Holzschicht und eine innere Holzschicht vorhanden sind sowie ein diese Teile durchdringendes Verbindungselement.

Aufgabe der Erfindung ist es, ein verbessertes Wandelement der eingangs angegebenen Art vorzuschlagen.

Erfindungsgemäß wird diese Aufgabe dadurch gelöst, daß im Bereich des Verbindungselements eine das Verbindungselement umgebende Isolationsschicht vorgesehen ist. Hierdurch kann die Wärmebrück unterbrochen werden.

Vorteilhafte Weiterbildungen sind in den Unteransprüchen beschrieben.

Vorteilhaft ist es, wenn das Verbindungselement an der Außenseite durch ein Isolationselement abgedeckt ist.

Bei dem Isolationselement handelt es sich vorzugsweise um eine Lattung. Das Isolationselement kann allerdings auch durch eine Konterlattung realisiert werden. Besonders vorteilhaft ist es, wenn eine Konterlattung vorgesehen ist, auf der die Lattung angebracht ist.

Vorzugsweise ist das Verbindungselement durch eine Hülse umgeben.

Stattdessen oder zusätzlich können eine oder mehrere Abdeckscheiben vorgesehen sein.

Nach einer weiteren vorteilhaften Weiterbildung ist ein die Außenkante der Vakuumisolationsplatte umgebendes Compriband vorgesehen. Anstelle des Compribandes oder zusätzlich zu diesem können andere Werkstoffe verwendet werden, die wärmedämmend wirken. Vorteilhaft ist es, wenn diese Werkstoffe ebenfalls elastisch sind.

Die erfindungsgemäße Fassade ist aus erfindungsgemäßen Wandelementen aufgebaut. Mit den erfindungsgemäßen Wandelementen kann insbesondere eine hinterlüftete und/oder demontierbare Fassade hergestellt werden.

Ausführungsbeispiele der Erfindung werden nachstehend anhand der beigefügten Zeichnung im einzelnen erläutert. In der Zeichnung zeigt
- Fig. 1: ein Wandelement in einer seitlichen Schnittansicht,
- Fig. 2: eine vergrößerte Ansicht eines lsolationselements und seiner Umgebung,
- Fig. 3: den Randbereich einer abgewandelten Vakuumisolationsplatte in einer seitlichen Schnittansicht,
- Fig. 4: zwei nebeneinanderliegende Vakuumisolationsplatten gemäß Fig. 3 in einer Teilansicht von vorne und
- Fig. 5: zwei nebeneinanderliegende, erneut abgewandelte Vakuumisolationsplatten in einer der Fig. 4 entsprechenden Teilansicht von vorne.

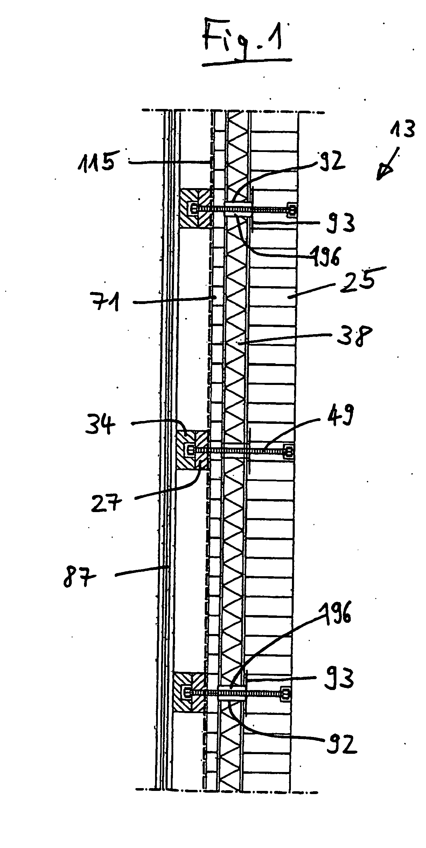

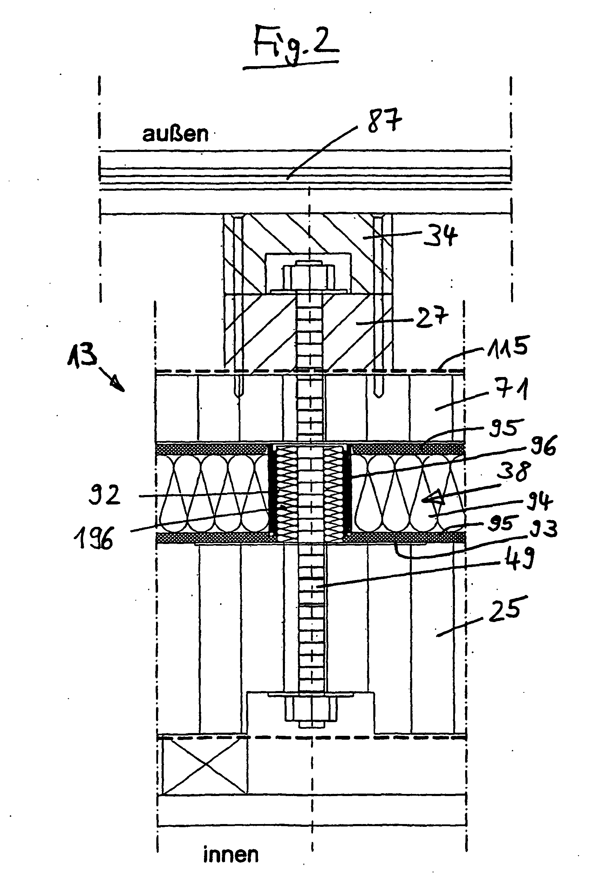

Das in Fig. 1 und 2 gezeigte Wandelement 13 umfaßt eine Vakuumisolationsplatte 38, eine äußere Holzschicht 71 und eine innere Holzschicht 25. Die äußere Holzschicht 71 kann aus Kerto, Holzwerkstoffplatten, Furnierplatten, Sperrholzplatten und/oder Vollholzplatten hergestellt sein. Die innere Holzschicht 25 kann aus KLH, HWP, VHP und/oder Dickholzplatten hergestellt sein, insbesondere aus Dickholzplatten mit statischer Tragfähigkeit. Vorteilhaft ist es, wenn die innere Holzschicht 25 aus statischen Lastabtrageplatten und die äußere Holzschicht 71 aus Fassadenplatten gebildet ist.

Ferner sind die Vakuumisolationsplatte 38, die äußere Holzschicht 71 und die innere Holzschicht 25 durchdringende Verbindungselemente 49 vorgesehen, die als Schraubbolzen aus Metall ausgebildet sind. An den inneren Enden sind Muttern aufgeschraubt, die in entsprechenden Vertiefungen der inneren Holzschicht 25 versenkt sind. Die Außenseite der äußeren Holzschicht 71 ist durch eine diffusionsoffene Abdichtung 115 abgedeckt.

Auf der äußeren Holzschicht 71 befindet sich eine Konterlattung 27, die ebenfalls von dem Verbindungselement 49 durchdrungen wird. Auf das äußere Ende des Verbindungselements 49 ist eine Mutter aufgeschraubt, die an der Außenseite der Konterlattung 27 anliegt.

Auf der Konterlattung 27 befindet sich eine Lattung 34. Die Lattung 34 ist aus einem wärmedämmenden Material hergestellt, insbesondere einem wärmedämmenden Kunststoff, insbesondere einem wärmedämmenden Schaumkunststoff wie beispielsweise PUR. Sie besitzt auf ihrer zum Wandelement 13 weisenden Seite eine Aussparung für die Mutter, die auf das äußere Ende des Verbindungselements 49 aufgeschraubt ist. Auf der Lattung 34 ist eine Holzschalung 87 angebracht.

Die Verbindungselemente 49 sind von jeweils einer Hülse 92 umgeben. Ferner ist im Bereich der Verbindungselemente 49 jeweils eine Abdeckscheibe 93 vorgesehen, die eine mittige Öffnung zum Durchtritt eines Verbindungselements 49 aufweist, die sich an den Enden der Hülse 92 nach außen anschließt und die den an die Hülse 92 anschließenden Bereich der Vakuumisolationsplatte 38 abdeckt. Die Abdeckscheiben 93 liegen an der Vakuumisolationsplatte 38 an, und zwar auf der der inneren Holzschicht 25 zugewandten Seite. Auf diese Weise liegen die Abdeckscheiben 93 zwischen der Vakuumisolationsplatte 38 und der inneren Holzschicht 29. Auf der anderen Seite der Vakuumisolationsplatte 38, also zwischen der Vakuumisolationsplatte 38 und der äußeren Holzschicht 71, können entsprechende Abdeckscheiben vorhanden sein (in der Zeichnung nicht dargestellt). Die Hülsen 92 und/oder die Abdeckscheiben 93 dienen zur Wärmeisolation der Verbindungselemente 49. Sie tragen dazu bei, daß durch die Verbindungselemente 49 keine Wärmebrücken gebildet werden.

Zur Wärmeisolation dient ferner eine das Verbindungselement 49 umgebende Isolationsschicht 196. Der Außenumfang der Isolationsschicht 196 liegt an der Hülse 92 an. Die Isolationsschicht 196 kann vom einem Compriband gebildet werden.

Die Vakuumisolationsplatte 38 umfaßt eine Vakuumdämmplatte 94, die auf beiden Seiten von jeweils einer Platte 95 aus Polyurethanschaum oder aus massivem Polyurethan umgeben ist. Die Außenseiten der Platten 95 sind von einer diffusionsdichten und gasdichten Umhüllung abgedeckt. Die Außenkanten der Vakuumdämmplatte 94 sind von einer druckstabilen Umrandung 96, insbesondere einem druckstabilen Konstruktionsschaum, umgeben. Die Umrandung 96 kann von einer Hochbarrierefolie umgeben sein. Die Hochbarrierefolie kann die Umrandung 96 und die äußeren Enden der Platten 95 einschließlich der Umhüllungen übergreifen, mit denen sie verbunden, insbesondere verklebt, sein kann.

Nebeneinanderliegende Vakuumisolationsplatten können im Bereich der Durchführung für ein Verbindungselement 49, also im Bereich einer Hülse 92 für ein Verbindungselement 49, jeweils Aussparungen aufweisen, die einander gegenüberliegen und in denen sich die Hülse 92 befindet.

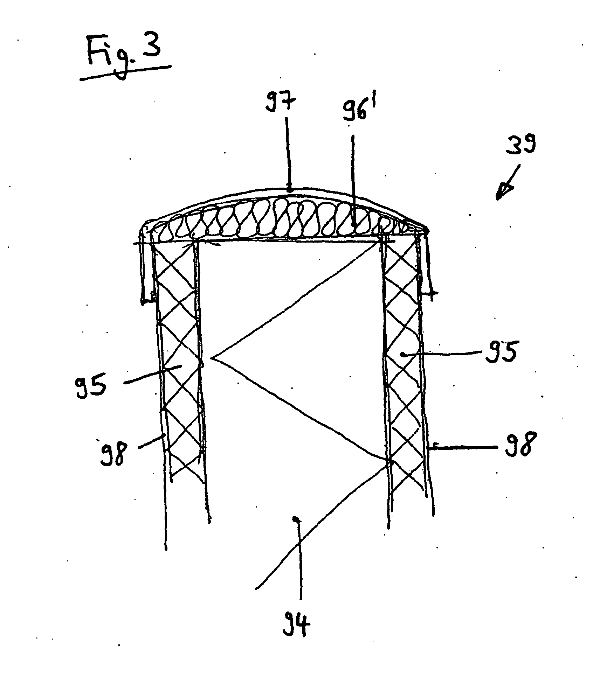

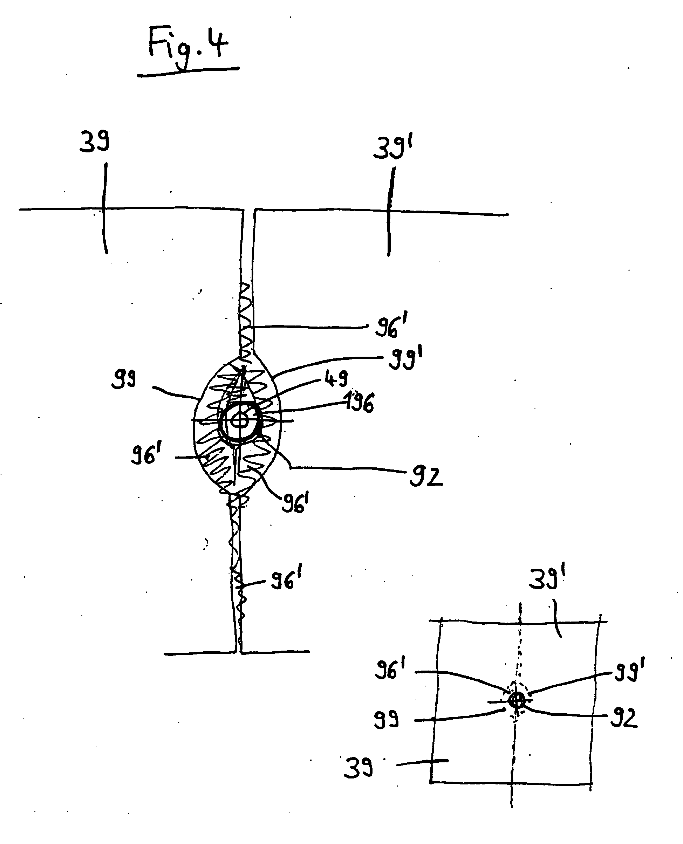

Fig. 3 und 4 zeigen eine abgewandelte Ausführungsform, bei der mit der ersten Ausführungsform übereinstimmende Teile mit denselben Bezugszeichen versehen sind. Die Vakuumisolationsplatten 39, 39' umfassen jeweils eine Vakuumdämmplatte 94, die auf beiden Seiten von jeweils einer Platte 95 aus Polyurethanschaum oder aus massivem Polyurethan umgeben ist. Die Außenseiten der Platten 95 sind von einer diffusionsdichten und gasdichten Umhüllung 98 abgedeckt. Die Außenkanten der Vakuumdämmplatte 94 sind von einem Compriband 96' umgeben, das seinerseits von einem Butylband 97 umgeben ist. Das Butylband 97 übergreift das Compriband 96' und die äußeren Enden der Platten 95 einschließlich der Umhüllungen 98, mit denen es verbunden, insbesondere verklebt, ist. Das Compriband 96' ist gewölbt. Seine Stärke nimmt von der Mitte nach außen hin ab. Wenn benachbarte Vakuumisolationsplatten 39, 39' aneinandergelegt werden, werden die zugehörigen Compribänder 96' zusammengedrückt, wodurch ein Fugendichtschluß nebeneinanderliegender Vakuumisolationsplatten 39, 39' gewährleistet werden kann.

In Fig. 4 sind Teilbereiche von zwei nebeneinanderliegenden Vakuumisolationsplatten 39, 39' dargestellt. Im Bereich der Durchführung für ein Verbindungselement 49, also im Bereich einer Hülse 92 für ein Verbindungselement 49, weisen die Vakuumisolationsplatten 39, 39' jeweils Aussparungen 99, 99' auf, die einander gegenüberliegen. Der Bereich zwischen den Aussparungen 99, 99' und der Hülse 92 wird ebenfalls durch die Compribänder 96' gefüllt.

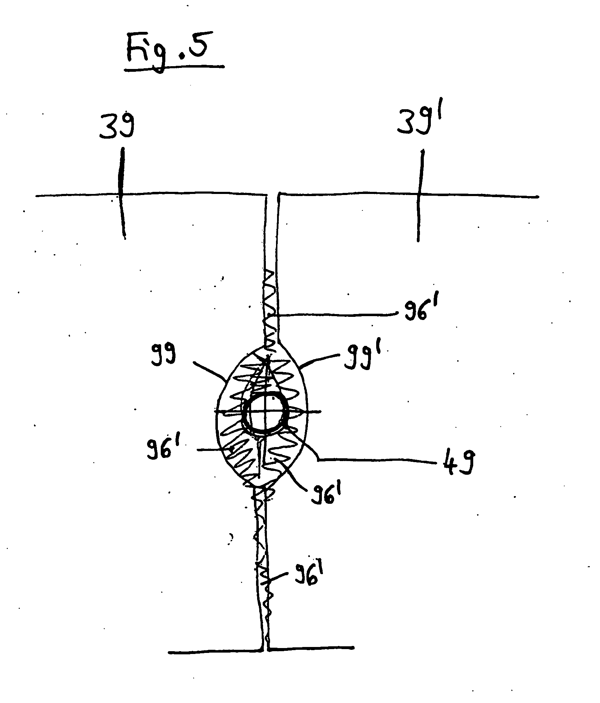

Die in Fig. 5 gezeigte Ausführungsform stimmt weitgehend mit derjenigen nach Fig. 4 überein, so daß gleiche Teile mit denselben Bezugszeichen versehen sind. Bei der Ausführungsform nach Fig. 5 sind keine Hülsen 92 und keine Isolationsschichten 196 vorhanden. Hier liegen die Compribänder 96' der Vakuumisolationsplatten 39, 39' unmittelbar an den Verbindungselementen 49 an.

Bei dem die Isolationsschicht 196 bildenden Compriband und bei dem Compriband 96' handelt es sich vorzugsweise um ein vorkomprimiertes Fugendichtband aus offenzelligem Kunststoffschaum, insbesondere Polyurethan-Weichschaum, mit Polymerimprägnat oder mit einem Imprägnat auf Acrylatbasis.

Die Wandelemente 13 bilden eine hinterlüftete Fassade, die demontierbar ist.

## Patentansprüche

1. Wandelement, umfassend eine Vakuumisolationsplatte (38, 39, 39'), eine äußere Holzschicht (71) und/oder eine innere Holzschicht (25) und ein diese Teile durchdringendes Verbindungselement (49),
**dadurch gekennzeichnet,**
**daß** im Bereich des Verbindungselements (49) eine das Verbindungselement (49) umgebende Isolationsschicht (196) vorgesehen ist.

2. Wandelement nach Anspruch 1, **dadurch gekennzeichnet, daß** das Verbindungselement (49) an der Außenseite durch ein Isolationselement (34, 27) abgedeckt ist.

3. Wandelement nach Anspruch 2, **dadurch gekennzeichnet, daß** das Isolationselement eine Lattung (34) und/oder eine Konterlattung (27) ist.

4. Wandelement nach einem der vorhergehenden Ansprüche, **gekennzeichnet durch** eine das Verbindungselement (49) umgebende Hülse (92).

5. Wandelement nach einem der vorhergehenden Ansprüche, **gekennzeichnet durch** eine oder mehrere Abdeckscheiben (93).

6. Wandelement nach einem der vorhergehenden Ansprüche, **gekennzeichnet durch** ein die Außenkante der Vakuumisolationsplatte (39, 39') umgebendes Compriband (96').

7. Fassade, **gekennzeichnet durch** Wandelemente (13) nach einem der Ansprüche 1 bis 6.

## Claims

1. A wall element, comprising a vacuum insulation board (38, 39, 39'), an outer wooden layer (71) and/or an inner wooden layer (25) and a connection element (49) passing through these parts,
**characterised in that**
an insulation layer (196) surrounding the connection element (49) is provided in the region of the connection element (49).

2. A wall element in accordance with claim 1, **characterised in that** the connection element (49) is covered by an insulation element (34, 27) at the outer side.

3. A wall element in accordance with claim 2, **characterised in that** the insulation element are battens (34) and/or counter battens (27).

4. A wall element in accordance with one of the preceding claims, **characterised by** a hull (92) surrounding the connection element (49).

5. A wall element in accordance with one of the preceding claims, **characterised by** one or more cover plates (93).

6. A wall element in accordance with one of the preceding claims, **characterised by** a compriband (96') surrounding the outer edge of the vacuum insulation board (39, 39').

7. A façade, **characterised by** wall elements (13) in accordance with one of the claims 1 to 6.

## Revendications

1. Elément mural, comprenant une plaque d'isolation sous vide (38, 39, 39'), une couche de bois extérieure (71) et/ou une couche de bois intérieure (25) et un élément de fixation (49) perçant ces pièces,
**caractérisé en ce que**,
dans la zone de l'élément de fixation (49), une couche d'isolation (196) entourant l'élément de fixation (49) est prévue.

2. Elément mural selon la revendication 1, **caractérisé en ce que** l'élément de fixation (49) est couvert à l'extérieur par un élément d'isolation (34, 27).

3. Elément mural selon la revendication 2, **caractérisé en ce que** l'élément d'isolation est un lattage (34) et/ou un contre-lattage (27).

4. Elément mural selon une quelconque des revendications précédentes, **caractérisé par** une gaine (92) entourant l'élément de fixation (49).

5. Elément mural selon une quelconque des revendications précédentes, **caractérisé par** un ou plusieurs plateaux de recouvrement (93).

6. Elément mural selon une quelconque des revendications précédentes, **caractérisé par** une compribande (96') entourant les bords extérieurs de la plaque d'isolation sous vide (39, 39').

7. Façade **caractérisée par** des éléments muraux (13) selon une des revendications 1 à 6.
